(19) Europäisches Patentamt
European Patent Office
Office européen des brevets

(11) **EP 2 899 168 B1**

(12) **EUROPEAN PATENT SPECIFICATION**

(45) Date of publication and mention
of the grant of the patent:
**31.01.2018 Bulletin 2018/05**

(51) Int Cl.:
***C03B 37/027*** *(2006.01)*

(21) Application number: **13838982.0**

(22) Date of filing: **24.09.2013**

(86) International application number:
**PCT/JP2013/075611**

(87) International publication number:
**WO 2014/046274 (27.03.2014 Gazette 2014/13)**

(54) **OPTICAL FIBER FABRICATION METHOD**

GLASFASERHERSTELLUNGSVERFAHREN

PROCÉDÉ DE FABRICATION DE FIBRE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2012 JP 2012209504**

(43) Date of publication of application:
**29.07.2015 Bulletin 2015/31**

(73) Proprietor: **Sumitomo Electric Industries, Ltd.
Osaka-shi, Osaka 541-0041 (JP)**

(72) Inventors:
• **NAKANISHI, Tetsuya**
**Yokohama-shi**
**Kanagawa 244-8588 (JP)**
• **KONISHI, Tatsuya**
**Yokohama-shi**
**Kanagawa 244-8588 (JP)**
• **KUWAHARA, Kazuya**
**Yokohama-shi**
**Kanagawa 244-8588 (JP)**

(74) Representative: **Hoffmann Eitle
Patent- und Rechtsanwälte PartmbB
Arabellastraße 30
81925 München (DE)**

(56) References cited:
**JP-A- 2000 335 934       JP-A- 2001 114 525
JP-A- 2006 030 655       JP-A- 2006 058 494
JP-A- 2010 168 247       US-A- 5 320 658
US-A1- 2002 059 816     US-A1- 2003 200 772
US-A1- 2005 259 932     US-A1- 2005 274 151
US-A1- 2005 281 521     US-A1- 2006 013 546
US-A1- 2006 101 861**

**Description**

Technical Field

The present invention relates to an optical fiber manufacturing method.

Background Art

For high-speed optical communication which allows a transmission rate of 100 Gbit/s or more, a high optical signal-to-noise ratio (OSNR) is required. Optical fibers used as optical transmission lines are increasingly demanded to be low-loss, low-nonlinearity optical fibers. Nonlinearity of an optical fiber is defined by $n_2/Aeff$, where $n_2$ is a nonlinear refractive index of the optical fiber and Aeff is an effective area of the optical fiber. The larger the effective area Aeff, the more it is possible to reduce concentration of optical power on the core and thus to reduce nonlinearity. A standard single-mode optical fiber compliant with ITU-T G. 652 has an effective area Aeff of about 80 $\mu m^2$ at a wavelength of 1550 nm. It is preferable, however, that the effective area Aeff of a low-nonlinearity optical fiber be in the range from 100 $\mu m^2$ to 180 $\mu m^2$.

An enlarged effective area Aeff means increased sensitivity to microbending. The loss increases when the optical fiber is installed and used in a cable. Considering the impact of the effective area Aeff on microbending, the effective area Aeff is preferably in the range from 100 $\mu m^2$ to 150 $\mu m^2$, depending on the refractive index profile of the optical fiber, the Young's modulus and thickness of resin, and the like.

As a low-loss optical fiber, an optical fiber (PSCF) having a core made of pure silica which contains substantially no impurities is known. However, the PSCF is generally expensive and there is a demand for low-loss, low-nonlinearity optical fibers which are inexpensive. An optical fiber (GCF) having a core doped with $GeO_2$ has been considered as being inferior to the PSCF in terms of the high-speed optical communication. This is because the GCF has higher Rayleigh scattering loss than that of the PSCF due to fluctuations in the concentration of $GeO_2$.

Japanese Unexamined Patent Application Publication No. 2006-58494 describes a slow cooling technique for reducing attenuation in the GCF. In this technique, a heating furnace for slow cooling is disposed downstream of a drawing furnace, where an optical fiber preform is heated and softened to be drawn into an optical fiber. The optical fiber is slowly cooled in the slow cooling furnace to lower the fictive temperature of a glass fiber, so that it is possible to suppress Rayleigh scattering in the optical fiber and thus to achieve low-loss characteristics.

Conventional slow-cooling techniques do not optimize the temperature history of the optical fiber in a predetermined range. As a result, such conventional slow-cooling techniques may not efficiently reduce attenuation in the optical fiber, and may degrade productivity, because a heating furnace for slow cooling may become unnecessarily long, or a drawing speed may become slow to ensure a long slow-cooling time.

US 2002/059816 A1 discloses an apparatus and a method for making an optical fiber. A drawing apparatus used in the method has a drawing furnace, a heating furnace and a resin curing section. The optical fiber drawn upon heating by the drawing furnace is fed to the heating furnace, whereby a predetermined part of the optical fiber is annealed at a predetermined cooling rate. Thereafter, the optical fiber is coated with a UV resin by a coating die and the UV resin is cured in the resin curing section, whereby a coated optical fiber is formed. A similar approach is also taught in US 2006/101861 A1.

US 5,320,658 discloses a process of melt drawing an optical fiber from a preform therefor in which a heating furnace comprising a muffle tube inside thereof through which the optical fiber is passed is provided immediately below a melt drawing furnace to further draw the optical fiber while heated, and an interior of the muffle tube is kept in an atmosphere selected from the group consisting of an inert atmosphere, an atmosphere comprising oxygen gas and an atmosphere comprising hydrogen gas.

Summary of Invention

Technical Problem

An object of the present invention is to provide a method by which a fictive temperature can be sufficiently lowered and a low-loss optical fiber can be manufactured with high productivity.

Solution to Problem

To achieve the object described above, an optical fiber manufacturing method according to a first aspect of the present invention is a method for manufacturing an optical fiber by drawing an optical fiber preform having a core made of silica glass containing $GeO_2$. The method includes a drawing step including drawing the optical fiber preform into the optical fiber by heating and softening an end of the optical fiber preform in a drawing furnace, and a slow cooling step including causing the optical fiber obtained in the drawing step to pass through a heating furnace having a temperature lower than a heating temperature in the drawing furnace. Let Tf(n) be a fictive temperature of the core at a position n in the drawing step or the slow cooling step, Tf(n+1) be a fictive temperature of the core at position n+1 and after the elapse of a unit time $\Delta t$, and $\tau(T(n))$ be a structural relaxation constant of a material of the core at a temperature T(n) of the optical fiber for the position n, the temperature of the heating furnace is set such that in at least 70% of a region from a first position to a second region, an actual temperature of the optical fiber is within $\pm 100°C$ of the target temperature T(n) for each position n, the first position being at which a glass outer diameter of the optical fiber becomes 500% of a final outer diameter, the second position being at which a temperature T of the optical fiber becomes 1400°C, and the target temperature T(n) being a temperature of the optical fiber at which Tf(n+1) is lowest, Tf(n+1) being determined by calculation using the recurrence formula,

$$Tf(n+1) = T(n) + (Tf(n)-T(n))\exp(-\Delta t/\tau(T(n))),$$

starting from a fictive temperature Tf(0) of the optical fiber at the first position n = 0.

In the optical fiber manufacturing method according to the present invention, at a position where the optical fiber after being formed in the drawing furnace is exposed to gas with a temperature of 500°C or less, a mean temperature of the optical fiber in a cross-sectional direction may be 1650°C or less. Also, $3\sigma$ of variation in a glass outer diameter of the optical fiber in a longitudinal direction may be not more than 0.2 $\mu$m.

An optical fiber manufacturing method according to a second aspect of the present disclosure is a method for manufacturing an optical fiber by drawing an optical fiber preform having a core made of silica glass containing $GeO_2$. The method includes a drawing step including drawing the optical fiber preform into the optical fiber by heating and softening an end of the optical fiber preform in a drawing furnace, and a slow cooling step including causing the optical fiber obtained in the drawing step to pass through a heating furnace having a temperature lower than a heating temperature in the drawing furnace. A temperature of the optical fiber at entry into the heating furnace is greater than or equal to 1400°C and less than or equal to 1650°C. A cooling rate of the optical fiber is 10000°C/s or more at a position where a glass outer diameter of the optical fiber is less than 500% of a final outer diameter and the temperature of the optical fiber is 1700°C or more. The cooling rate of the optical fiber is 5000°C/s or less at a position where the temperature of the optical fiber is greater than or equal to 1400°C and less than or equal to 1600°C.

In the optical fiber manufacturing method of the second aspect, a length of the heating furnace in the slow cooling step may be 1.5 m or more. The heating furnace used in the slow cooling step may include an upstream heating furnace and a downstream heating furnace, and an inner surface temperature of the downstream heating furnace may be higher than an inner surface temperature of the upstream heating furnace. Specifically, the inner surface temperature of the downstream heating furnace may be at least 50°C higher than the inner surface temperature of the upstream heating furnace. The inner surface temperature of the downstream heating furnace may be set to be within $\pm 100°C$ of a fictive temperature of the optical fiber passing through the downstream heating furnace.

The optical fiber manufacturing method of the first or second aspect may further include a deuterium treatment step including exposing the optical fiber to a deuterium gas atmosphere after the slow cooling step.

Advantageous Effects of Invention

According to the present invention, it is possible to sufficiently lower a fictive temperature and manufacture a low-loss optical fiber with high productivity.

Brief Description of Drawings

Figure 1 is a cross-sectional view of an optical fiber according to the present invention.

Figure 2 is a conceptual diagram illustrating a configuration of a drawing apparatus for manufacturing the optical fiber illustrated in Fig. 1.

Figure 3 is a graph showing a Raman spectrum of silica glass.

Figure 4 is a graph for explaining a relationship between a temperature T(n) of an optical fiber at a position n and a fictive temperature Tf(n+1) of an optical fiber at a position n+1.

Figure 5 is a flowchart illustrating a procedure for determining a target temperature T(n) of an optical fiber at each position.

Figure 6 is a graph showing a derived slow-cooling thermal history appropriate for a standard single-mode optical fiber.

Description of Embodiments

Embodiments for carrying out the present invention will now be described in detail with reference to the attached drawings. In the description of the drawings, the same elements are given with the identical reference numerals, and redundant description will be omitted.

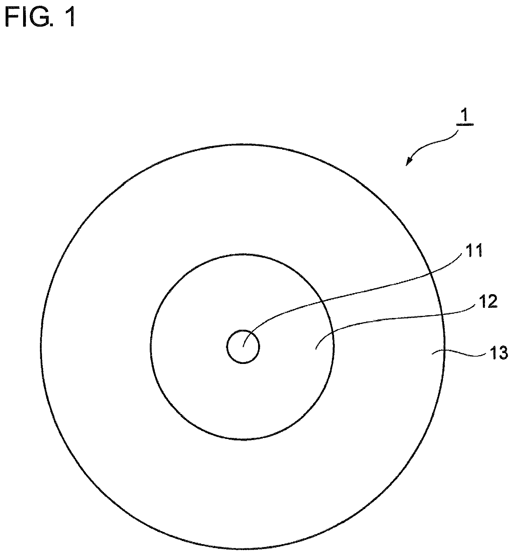

Figure 1 is a cross-sectional view of an optical fiber 1 according to the present invention. The optical fiber 1 is a silica-based optical fiber and includes a center core 11 having a center axis, an optical cladding 12 surrounding the center core 11, and a jacket 13 surrounding the optical cladding 12.

Relative refractive index differences of the center core 11 and the jacket 13 are respectively described relative to the refractive index of the optical cladding 12. The refractive index of the center core 11 is described as an equivalent step index (ESI). A diameter at which a differential value of radial change in refractive index at the boundary between the optical cladding 12 and the jacket 13 is largest is defined as the outer diameter of the optical cladding 12. The mean value of refractive indices in the region from the outer edge of the optical cladding 12 to the outermost edge of glass is used as the refractive index of the jacket 13.

The optical fiber 1 has the center core containing $GeO_2$. The refractive index profile of the optical fiber 1 may be of any of a step type, a W type, a trench type, and a ring core type. If the refractive index profile is of any of the W type, the trench type, and the ring core type, a refractive index profile portion in which most of the power of light propagates and which substantially determines the mode field is defined as the center core, and a portion surrounding the center core is defined as the optical cladding.

The center core 11 may further contain fluorine element. The optical cladding 12 has a refractive index lower than that of the center core 11. The optical cladding 12 may be made of either pure silica glass or silica glass doped with fluorine element. The jacket 13 is made of silica glass. The jacket 13 may contain chlorine element, and contains substantially no impurities other than chlorine element.

Suppressing Rayleigh scattering in the optical fiber 1 can reduce attenuation of the optical fiber 1. The Rayleigh scattering can be effectively suppressed by lowering the fictive temperature of glass of the optical fiber 1. First and second methods described below are examples of a method for lowering the fictive temperature of glass.

The first method for lowering the fictive temperature of the glass of the optical fiber 1 is a method (slow cooling method) in which, when an optical fiber preform is drawn to form the optical fiber 1, the cooling rate of the optical fiber formed by drawing is reduced to promote structural relaxation of the glass network and lower the fictive temperature of the glass. The second method for lowering the fictive temperature of the glass of the optical fiber 1 is a method in which the center core 11 is doped with a very small amount of dopant, which promotes structural relaxation of the center core 11 but does not increase attenuation caused by light absorption, to lower the fictive temperature of the glass.

Rayleigh scattering in the optical fiber 1 may be suppressed either by the first or second method, or by an appropriate combination of both the methods. The slow cooling method will be described below.

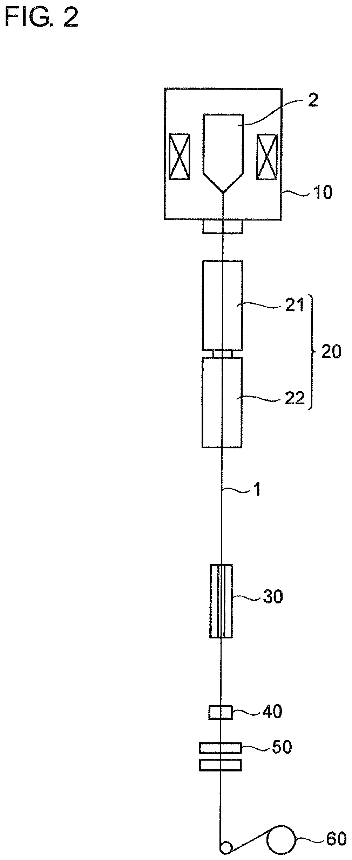

Figure 2 is a conceptual diagram illustrating a configuration of a drawing apparatus for manufacturing the optical fiber 1. The drawing apparatus includes a drawing furnace 10, a heating furnace 20, a forcible cooling unit 30, a die 40, a UV irradiation unit 50, and a take up bobbin 60. The heating furnace 20 includes an upstream heating furnace 21 and a downstream heating furnace 22. The drawing apparatus draws an optical fiber preform 2 to form the optical fiber 1.

The optical fiber 1 is manufactured by the following method. First, a core which guides light and an optical cladding are formed by a vapor-phase glass synthesis method, such as VAD, OVD, MCVD, or PCVD. Then, a jacket layer is formed around the optical cladding by VAD, OVD, APVD, a rod-in-collapse method, or the like to form the optical fiber preform 2. The resultant optical fiber preform 2 is attached to a drawing tower. In the drawing furnace 10, a lower end portion of the optical fiber preform 2 is softened by heating it to a temperature higher than or equal to the working point, so that the optical fiber preform 2 is drawn by its own weight. The stretched and falling glass is appropriately drawn into an optical fiber. While the outer diameter of the optical fiber is under control, the optical fiber passes through the die 40 for application of resin and the UV irradiation unit 50 for curing the resin, and is formed into a coated optical fiber, which is then wound on the take up bobbin 60.

Generally, the optical fiber 1 has a resin coating layer on the outer periphery of the jacket 13. The resin coating layer has a two-layer structure which includes a primary coating layer and a secondary coating layer. The primary coating layer is for preventing direct action of external force to the glass fiber, and the secondary coating layer is for preventing external damage. The die 40 for applying each of the resin layers may be arranged in series in the drawing step.

Alternatively, the die 40 may form the two layers at the same time. Since the drawing tower can be lowered in the latter case, the cost of constructing a building accommodating a drawing tower can be reduced.

The heating furnace 20 controls the cooling rate of the glass fiber obtained by drawing. By providing the heating furnace 20 between the drawing furnace 10 and the die 40, the surface temperature of the glass fiber at entry into the die 40 can be controlled to a preferred level. To suppress vibration caused by turbulent flow and applied to the fiber obtained by drawing, it is preferable that the Reynolds number of gas flow in the device that controls the cooling rate be low. By controlling the cooling rate of the glass fiber, Rayleigh scattering can be suppressed and an optical fiber with low attenuation can be obtained.

The UV irradiation unit 50 for curing a resin performs feedback control not only on the intensity of UV light but also on the temperature inside the UV irradiation unit, so as to appropriately control the curing rate of the resin. Preferred examples of the UV irradiation unit 50 include a magnetron and an ultraviolet LED. When an ultraviolet LED is used, since the light source itself does not generate heat, an additional mechanism for introducing warm air is provided to maintain an appropriate temperature inside the UV irradiation unit. Components desorbed from the resin adhere to the inner surface of the center tube of the UV irradiation unit 50. As a result, the power of UV light reaching the coating layer during the drawing process is changed. Therefore, the degree of reduction in the power of UV light during the drawing process may be monitored in advance, and the power of UV light may be adjusted in accordance with the drawing time so that the power of UV light applied to the coating layer becomes constant. The UV light leaking out of the center tube of the UV irradiation unit may be monitored and controlled so that the power of UV light applied to the coating layer becomes constant. Thus, an optical fiber having a uniform breaking strength over the entire length can be obtained.

It is preferable that the thickness of the secondary coating layer of the two coating layers be appropriately set to ensure resistance to external damage. Generally, the thickness of the secondary coating layer is preferably greater than or equal to 10 $\mu$m, and more preferably greater than or equal to 20 $\mu$m.

The coating layer of the optical fiber 1 formed and wound on the take up bobbin, as described above, is colored as necessary. The optical fiber 1 is then used as an end product, such as an optical cable or an optical cord.

In the present embodiment, the optical fiber 1 formed in the drawing furnace 10 exits the drawing furnace 10, passes through the heating furnace 20, and enters the die 40. A region from a point which is in the softened lower end portion of the optical fiber preform 2 and has a diameter of 500% of the final outer diameter (generally 125 $\mu$m) of the optical fiber 1 to a point at which the temperature of the formed optical fiber becomes 1400°C is continuously cooled in the heating furnace 20 at a cooling rate ranging from 1000°C/s to 10000°C/s. The heating furnace 20 is disposed below the drawing furnace 10, or more specifically below a plane (drawing furnace exit) from which the formed optical fiber 1 virtually exits the drawing furnace 10. The distance from the exit of the drawing furnace 10 to the entrance of the heating furnace 20 is 1 m or less. The region between the exit of the drawing furnace 10 and the entrance of the heating furnace 20 preferably has a thermal insulation structure that prevents a decrease in temperature of the formed optical fiber 1. The temperature of the optical fiber 1 at entry into the heating furnace 20 is preferably higher than or equal to 1000°C, and more preferably higher than or equal to 1400°C.

It is thus possible to shorten the length of the heating furnace 20 in which the optical fiber 1 is reheated to a temperature (generally a glass transition temperature or above) at which the optical fiber 1 can substantially experience structural relaxation so that it is possible to take a longer period of structural relaxation time. Let V be a drawing speed, a length L of the heating furnace 20 is set such that L/V is 0.05 s or more. The heating furnace 20 preferably includes a plurality of furnaces 21 and 22. This makes it possible to control the cooling rate of the optical fiber 1 in the longitudinal direction. By using the heating furnace 20 in manufacture, an optical fiber with suppressed Rayleigh scattering can be obtained.

Increasing the value of L/V can lower the fictive temperature of the glass. Considering economic rationality on the basis of the level of technology at the time of application of the present application, however, it is preferable that the drawing speed V be 30 m/s or more. For example, to achieve L/V = 0.2 s, it is necessary that the length L of the heating furnace be 6 m. For higher-speed drawing, the length L of the heating furnace 20 is increased and this leads to lower work efficiency, or the overall height of the drawing apparatus needs to be increased and this results in an increased capital investment. Thus, there are some tradeoffs to be made to achieve work efficiency, reduced capital investment, line speed, and low-loss characteristics. To establish economical manufacturing conditions, it is important to efficiently perform slow cooling and reduce the necessary length L of the heating furnace 20.

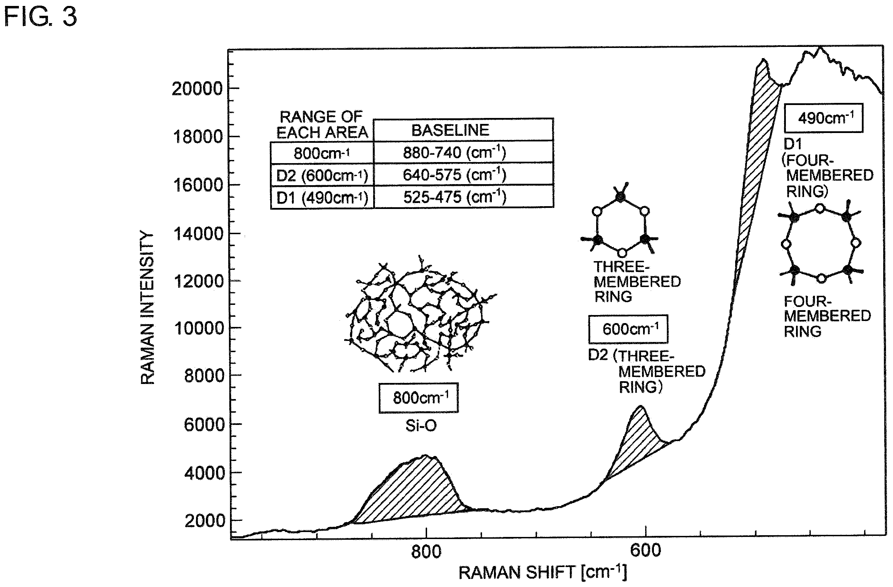

Figure 3 is a graph showing a Raman spectrum of silica glass. A baseline is drawn in a wavenumber range of 525 cm$^{-1}$ to 475 cm$^{-1}$, and a D1 peak area enclosed by the baseline and the spectrum is calculated. Also, a baseline is drawn in a wavenumber range of 880cm$^{-1}$ to 740cm$^{-1}$, and an 800cm$^{-1}$ peak area enclosed by the baseline and the spectrum is calculated. The fictive temperature of silica glass can be determined by using a relationship between the ratio of the D1 peak area to the 800cm$^{-1}$ peak area and a fictive temperature measured in advance by the IR technique (see D.-L. Kim, et al., J. Non-Cryst. Solids, Vol. 286, pp. 136-138 (2001)) using bulk glass or the like. The fictive temperature of the optical fiber can be evaluated by measuring a microscopic Raman scattering spectrum of silica glass at each portion of the optical fiber and using the method described above.

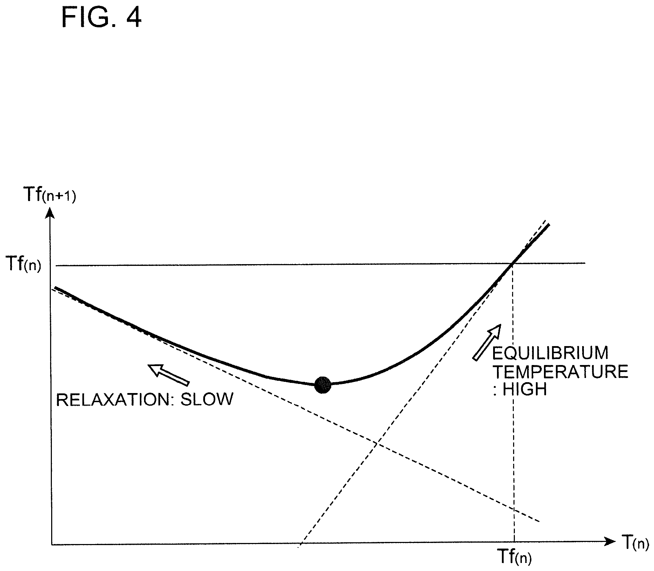

With reference to the graph (Fig. 4) for explaining a relationship between a temperature T(n) of an optical fiber at a position n and a fictive temperature Tf(n+1) of an optical fiber at a position n+1, a slow cooling operation in the optical fiber manufacturing method of the present embodiment will be described. The optical fiber manufacturing method of the present embodiment includes a drawing step including drawing the optical fiber preform 2 into the optical fiber 1 by heating and softening an end of the optical fiber preform 2 in the drawing furnace 10, and a slow cooling step including causing the optical fiber 1 obtained in the drawing step to pass through the heating furnace 20 having a temperature lower than a heating temperature in the drawing furnace 10. The optical fiber manufacturing method involves performing the following slow cooling operation.

A structural relaxation constant $\tau$ representing a relaxation rate of the glass structure is dependent on the material and the temperature T and is expressed by Eq. (1):

$$\tau(T) = A\exp(Ea/k_BT) \ldots\ldots (1),$$

where A is a coefficient, Ea is an activation energy, and $k_B$ is the Boltzmann constant.

Let Tf(n) be a fictive temperature of the core at a position n in the drawing step or the slow cooling step, Tf(n+1) be a fictive temperature of the core at a position n+1 and after the elapse of a unit time $\Delta t$, and T(n) be a temperature of the optical fiber at the position n, a recurrence formula expressed by Eq. (2):

$$Tf(n+1) = T(n) + (Tf(n)-T(n))\exp(-\Delta t/\tau(T(n))) \ldots\ldots (2)$$

is established. Figure 4 shows a relationship expressed by this recurrence formula.

Equation (2) shows, as in Fig. 4, that if the temperature T(n) is too low, since the structural relaxation constant $\tau$ increases and the structural relaxation time becomes long , the fictive temperature Tf(n+1) after the elapse of the unit time becomes high. On the other hand, if the temperature T(n) is too high, since the temperature equilibrium with the fictive temperature rises, the fictive temperature Tf(n+1) after the elapse of the unit time becomes high. Thus, the fictive temperature Tf(n+1) after the elapse of the unit time is high when the temperature T(n) is either too low or too high. There is a temperature T(n) at which the fictive temperature Tf(n+1) after the elapse of the unit time is lowest.

Conventionally, optimization of the temperature T(n) has been performed on the optical fiber passing through the heating furnace 20, not on the optical fiber before entry into the heating furnace 20. In the present embodiment, the temperature of the heating furnace 20 is set such that the fictive temperature Tf(n) of the optical fiber is effectively lowered in at least 70% of the region from a first position at which the glass outer diameter of the optical fiber becomes 500% of the final outer diameter to a second position at which the temperature T of the optical fiber becomes 1400°C. Specifically, the temperature of the heating furnace 20 is set such that an actual temperature of the optical fiber is within ±100°C (preferably within ±50°C) of the target temperature T(n). The target temperature T(n) is a temperature of the optical fiber at which Tf(n+1) determined for each position n by calculation using the above-described recurrence formula, starting from the fictive temperature Tf(0) of the optical fiber at the first position (n = 0), is lowest.

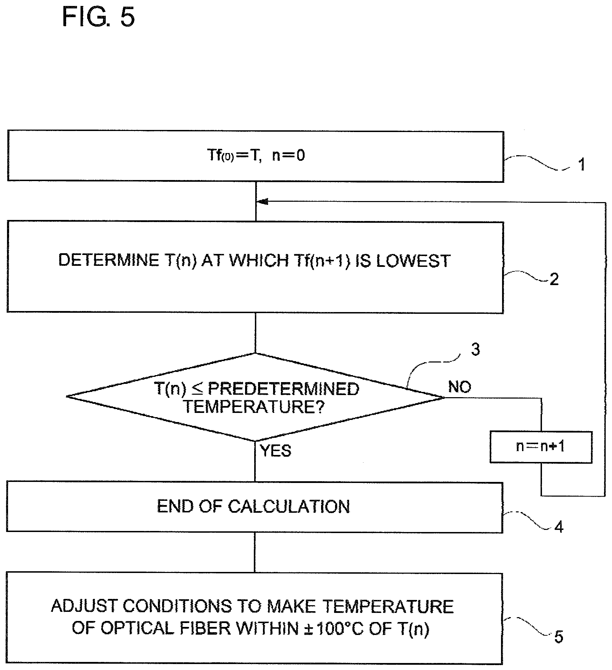

Figure 5 is a flowchart illustrating a procedure for determining a target temperature T(n) of an optical fiber at each position. First, the fictive temperature of the optical fiber at the first position (n = 0) is set to Tf(0) (STEP 1). Since $\tau(T)$ is small at the first position, the fictive temperature Tf(0) is substantially equal to the actual temperature T(0) of the optical fiber. Next, the target temperature T(0) at which the fictive temperature Tf(1) of the core after the elapse of the unit time $\Delta t$ is lowest is determined analytically or by numerical analysis (STEP 2). Similarly, for the fictive temperature Tf(n) of the core at a given position n, the target temperature T(n) at which the fictive temperature Tf(n+1) after the elapse of the unit time $\Delta t$ is lowest is determined. This process starts at the first position at which the glass outer diameter of the optical fiber becomes a predetermined outer diameter. At the second position at which the temperature T(n) of the optical fiber becomes a predetermined temperature or less (STEP 3), the process ends (STEP 4). Then, the temperature of the heating furnace 20 is set such that an actual temperature of the optical fiber is within ±100°C (preferably within ±50°C) of the target temperature T(n) (STEP 5).

The first position at which the process starts is a position at which the glass outer diameter of the optical fiber becomes 500% of the final outer diameter, and is preferably a position at which the glass outer diameter of the optical fiber becomes 200% of the final outer diameter. It is thus possible to perform slow cooling without sacrificing controllability of the outer diameter of the optical fiber. The second position at which the process ends is a position at which the temperature of the optical fiber becomes 1400°C. It is thus possible to sufficiently lower the fictive temperature.

By determining the target temperature as described above, the temperature history to be experienced by the optical fiber when the fictive temperature is most efficiently lowered can be determined for a given material, and thus an optical fiber with suppressed Rayleigh scattering can be obtained. Therefore, it is possible to shorten the slow cooling time necessary to achieve predetermined attenuation, and the length of the heating furnace for slow cooling can be reduced.

At a position where the temperature changes abruptly, a turbulent flow occurs and the cooling efficiency given to the optical fiber randomly changes. If the viscosity of the optical fiber is low at this point, the glass outer diameter of the optical fiber varies. Therefore, at the position where the optical fiber is exposed to gas with a temperature of 500°C or less for the first time after it is formed in the drawing furnace 10, the mean temperature of the optical fiber in the cross-sectional direction is preferably 1650°C or less, and more preferably 1550°C or less. Thus, variation in glass outer diameter of the optical fiber can be reduced to about $\pm 0.2$ $\mu$m or less in $3\sigma$ while the fictive temperature can be lowered.

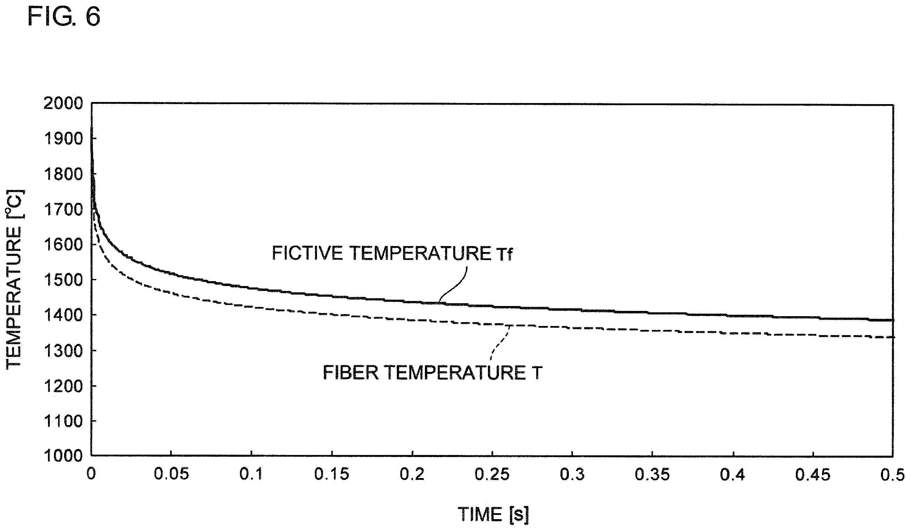

Figure 6 is a graph showing a derived slow-cooling thermal history appropriate for a standard single-mode optical fiber. In a standard single-mode optical fiber having a core doped with 3.5 mol/% $GeO_2$ parameter values in Eq. (1) are A = $0.8 \times 10^{-15}$ and Ea = -4.67eV. As shown in Fig. 6, in the appropriate slow-cooling thermal history, an effective way of lowering the fictive temperature is to quickly cool the optical fiber when the optical fiber temperature is high and to decrease the cooling rate of the optical fiber as the optical fiber temperature decreases.

To achieve optical characteristics appropriate for a standard single-mode optical fiber (compliant with ITU-T G. 652), the concentration of $GeO_2$ in the core is set to be in the range from about 3.0 mol% to about 4.0 mol%. In this case, when the optical fiber is slowly cooled to obtain the appropriate slow-cooling thermal history shown in Fig. 6, predicted variation of the fictive temperature can fall within $\pm 50$°C. The value of $\tau(T)$ varies, however, depending on the additional dopant in the core and the composition of the jacket. By experimentally determining the value of $\tau(T)$ from the composition of the optical fiber preform and using the technique described above, a slow-cooling thermal history can be derived, in which the fictive temperature can be efficiently lowered regardless of the composition of the optical fiber preform.

In the actual drawing step and slow cooling step, the closer the temperature of the optical fiber is set to a derived target temperature history, the more efficiently the fictive temperature of the optical fiber can be lowered. When the drawing operation is performed such that the difference between the actual temperature and the derived target temperature history is preferably within $\pm 100$°C in at least 70% of the region being subjected to the drawing or slow cooling step, the fictive temperature of the optical fiber can be lowered efficiently. More preferably, the temperature difference is within $\pm 50$°C.

It is preferable that the temperature of the optical fiber be controlled in accordance with the ideal temperature profile shown in Fig. 6. However, it may be difficult to precisely control the temperature of the optical fiber. In such a case, a mean cooling rate is determined for each of the temperature range from 1700°C and above and the temperature range from 1400°C to 1600°C, and then the temperature of the optical fiber is controlled to be lowered at the determined mean cooling rate. In the case of Fig. 6, the mean cooling rate in the region where the optical fiber temperature is 1700°C or above is 10000°C/s, and the mean cooling rate in the region where the optical fiber temperature is in the range from 1400°C to 1650°C is 5000°C/s or less (more preferably 3000°C/s or less). The time dependence of the appropriate thermal history is constant regardless of the line speed. Therefore, the necessary length and installation position of the heating furnace may be corrected in accordance with the line speed.

The temperature of the optical fiber at entry into the heating furnace 20 is preferably 1400°C or more. This can prevent an excessive drop in the temperature of the optical fiber and an increase in relaxation constant. Also, the temperature of the optical fiber at entry into the heating furnace 20 is preferably 1650°C or less. This can sufficiently lower the temperature at the temperature turning point and can reduce variation in outer diameter to within 0.15 $\mu$m.

By giving an appropriate slow-cooling thermal history of ideally 0.05 s or more, shown in Fig. 6, to the optical fiber, the fictive temperature of the optical fiber can be lowered to 1560°C or less and attenuation at a wavelength of 1.55 $\mu$m can be reduced to 0.182 dB/km or less. In this case, at a production line speed of 30m/s or more which is necessary to obtain an economical optical fiber, the heating furnace for slow cooling (having a temperature within $\pm 100$°C of the target temperature) needs to be 1.5 m long or more. However, it is not preferable that the heating furnace for slow cooling be too long, because the need for an increased overall height of the drawing tower arises, the work efficiency decreases, and the construction cost increases. The length of the heating furnace for slow cooling is preferably 8 m or less, more preferably 5 m or less, and still more preferably 2 m or less.

It is preferable that the temperature inside the heating furnace 20 be lowered at a cooling rate of 5000°C/s or less, and that the optical fiber temperature be gradually lowered toward the downstream part. In actual manufacture, however, since a chimney effect produces an upward air current inside the heating furnace 20, gas having a temperature close to the room temperature flows into the heating furnace 20 from the downstream part of the heating furnace 20. This lowers the temperature of the gas to which the optical fiber is virtually exposed inside the heating furnace 20. The temperature in the heating furnace 20 rises toward the upstream part and approaches the inner surface temperature of the heating furnace 20. Thus, by making the inner surface temperature of the downstream heating furnace 22 higher than that of the upstream heating furnace 21, an appropriate slow-cooling thermal history can be obtained. It is preferable to make the inner surface temperature of the downstream heating furnace 22 at least 50°C higher than that of the upstream heating furnace 21.

An ideal slow-cooling thermal history can be easily approximated by making the inner surface temperature of the downstream heating furnace 22 within ±100°C (more preferably within ±50°C) of the fictive temperature of the formed optical fiber.

By the optical fiber manufacturing method of the present embodiment, an optical fiber can be economically obtained in which attenuation at a wavelength of 1550 nm is reduced to 0.182 dB/km or less (preferably 0.179 dB/km or less), and also an optical fiber can be economically obtained in which an increase in attenuation caused by the OH radical at a wavelength of 1383 nm is reduced to 0.02 dB/km or less.

If the distance from the heating furnace 20 to the forcible cooling unit 30 is short and the temperature of the optical fiber at entry into the forcible cooling unit 30 is 1200°C or more, the hydrogen-resistant characteristic of the optical fiber may deteriorate. By adding a deuterium treatment step including exposing an optical fiber to a deuterium gas atmosphere, an increase in attenuation caused by hydrogen diffusion can be prevented, and a low-loss optical fiber can be obtained.

Industrial Applicability

The present invention is suitably applicable to optical transmission lines required to have low-loss characteristics.

Citation List

Non Patent Literature

NPL 1: S. Sakaguchi, et al., Applied Optics, Vol. 37, Issue 33, pp. 7708-7711 (1998)
NPL 2: K. Saito, et al., J. Am. Ceram. Soc., Vol. 89 [1], pp. 65-69 (2006)
NPL 3: IEICE Technical Report OFT 2007-19 (2007-8)

**Claims**

1. An optical fiber manufacturing method for manufacturing an optical fiber (1) by drawing an optical fiber preform (2) having a core made of silica glass containing $GeO_2$ the method comprising:

   a drawing step including drawing the optical fiber preform (2) into the optical fiber (1) by heating and softening an end of the optical fiber preform (2) in a drawing furnace (10); and
   a slow cooling step including causing the optical fiber (1) to pass through a heating furnace (20) having a temperature lower than a heating temperature in the drawing furnace (10),
   **characterised in that**
   the temperature of the heating furnace (20) is set such that in at least 70% of a region from a first position to a second position, an actual temperature of the optical fiber (1) is within ±100°C of a target temperature T(n) for each position n, the first position being at which a glass outer diameter of the optical fiber (1) becomes 500% of a final outer diameter, the second position being at which a temperature T of the optical fiber (1) becomes 1400°C, and the target temperature T(n) being a temperature of the optical fiber (1) at which Tf(n+1) is lowest, Tf(n+1) being a fictive temperature of the core at a position n+1 and after the elapse of a unit time $\Delta t$ in the drawing step or the slow cooling step and determined by calculation using the recurrence formula,

$$Tf(n+1) = T(n) + (Tf(n)\text{-}T(n))exp(\text{-}\Delta t/\tau(T(n))),$$

   starting from a fictive temperature Tf(0) of the optical fiber (1) at the first position n = 0, Tf(n) being a fictive temperature of the core at a position n in the drawing step or the slow cooling step, and $\tau(T(n))$ being a structural relaxation constant of a material of the core at a temperature T(n) of the optical fiber (1) for the position n.

2. The optical fiber manufacturing method according to Claim 1, wherein
   at a position where the optical fiber (1) after being formed in the drawing furnace (10) is exposed to gas with a temperature of 500°C or less, a mean temperature of the optical fiber (1) in a cross-sectional direction is 1650°C or less.

3. The optical fiber manufacturing method according to Claim 1 or 2, wherein
   $3\sigma$ of variation in a glass outer diameter of the optical fiber (1) in a longitudinal direction is not more than 0.2 $\mu$m.

4. The optical fiber manufacturing method according to Claim 1, further comprising a deuterium treatment step including exposing the optical fiber (1) to a deuterium gas atmosphere after the slow cooling step.

## Patentansprüche

1. Glasfaserherstellungsverfahren zum Herstellen einer Glasfaser (1) durch Ziehen eines Glasfaservorformlings (2), der einen Kern aus Silicatglas, welches GeO$_2$ enthält, aufweist, das Verfahren umfassend:

   einen Ziehschritt, der das Ziehen des Glasfaservorformlings (2) zu einer Glasfaser (1) durch Erhitzen und Aufweichen eines Endes des Glasfaservorformlings (2) in einem Ziehofen (10) beinhaltet; und
   einen langsamen Kühlschritt, der das Bewirken beinhaltet, dass die Glasfaser (1) einen Heizofen (20) durchläuft, der eine Temperatur aufweist, die niedriger als eine Heiztemperatur im Ziehofen (10) ist,
   **dadurch gekennzeichnet, dass**
   die Temperatur des Heizofens (20) derart eingestellt wird, dass in mindestens 70 % einer Region von einer ersten Position zu einer zweiten Position eine tatsächliche Temperatur der Glasfaser (1) innerhalb von $\pm 100$ °C einer Zieltemperatur T(n) für jede Position n liegt, wobei die erste Position diejenige ist, an der ein Glasaußendurchmesser der Glasfaser (1) 500 % eines endgültigen Außendurchmessers wird, die zweite Position diejenige ist, an der eine Temperatur T der Glasfaser (1) 1400 °C wird, und die Zieltemperatur T(n) eine Temperatur der Glasfaser (1) ist, an der (Tf(n+1) am niedrigsten ist, wobei Tf(n+1) eine fiktive Temperatur des Kerns an einer Position n+1 und nach dem Ablauf einer Einheitszeit $\Delta$t im Ziehschritt oder im langsamen Kühlschritt ist und durch Berechnung unter der Rekursionsformel,

$$Tf(n+1) = T(n) + (Tf(n)-T(n))\exp(-\Delta t/\tau(T(n))),$$

   bestimmt wird, beginnend ab einer fiktiven Temperatur Tf(0) der Glasfaser (1) an der ersten Position n = 0, wobei Tf(n) eine fiktive Temperatur des Kerns an einer Position n im Ziehschritt oder im langsamen Kühlschritt ist, und wobei $\tau$(T(n)) eine strukturelle Relaxationskonstante eines Materials des Kerns auf einer Temperatur T(n) der Glasfaser (1) für die Position n ist.

2. Glasfaserherstellungsverfahren nach Anspruch 1, wobei
   an einer Position, an der die Glasfaser (1) nach der Ausbildung im Ziehofen (10) einem Gas mit einer Temperatur von 500 °C oder weniger ausgesetzt wird, eine mittlere Temperatur der Glasfaser (1) in einer Querschnittsrichtung 1650 °C oder weniger beträgt.

3. Glasfaserherstellungsverfahren nach einem der Ansprüche 1 oder 2, wobei
   $3\sigma$ Variation in einem Glasaußendurchmesser der Glasfaser (1) in einer Längsrichtung nicht mehr als 0,2 $\mu$m beträgt.

4. Glasfaserherstellungsverfahren nach Anspruch 1, weiter umfassend einen Deuteriumbehandlungsschritt, der das Aussetzen der Glasfaser (1) einer Deuteriumgasatmosphäre nach dem langsamen Kühlschritt beinhaltet.

## Revendications

1. Procédé de fabrication d'une fibre optique pour fabriquer une fibre optique (1) en étirant une préforme de fibre optique (2) ayant un coeur en verre de silice contenant GeO$_2$ le procédé comprenant :

   une étape d'étirage consistant à étirer la préforme de fibre optique en la fibre optique (1) en chauffant et en ramollissant une extrémité de la préforme de fibre optique (2) dans un four d'étirage (10) ; et
   une étape de refroidissement lent consistant à faire passer la fibre optique (1) dans un four de chauffage (20) ayant une température inférieure à une température de chauffage dans le four d'étirage (10),
   **caractérisé en ce que**
   la température du four de chauffage (20) est réglée de sorte qu'au moins 70 % d'une région allant de la première position à une seconde position, une température réelle de la fibre optique (1) correspond à ± 100°C d'une température cible T(n) pour chaque position n, la première position étant à une où un diamètre extérieur de verre de la fibre optique (1) atteint 500 % d'un diamètre extérieur final, la seconde position étant une où une température T de la fibre optique (1) atteint 1400°C, et la température cible T(n) étant une température de la fibre optique (1) à laquelle Tf(n+1) est la plus basse, Tf(n+1) étant une température fictive du coeur à une position n+1 et après l'écoulement d'un temps unitaire Δt dans l'étape d'étirage ou l'étape de refroidissement lent et déterminée par calcul en utilisant la formule de récurrence,

$$Tf(n+1) = T(n) + (Tf(n)-T(n)) \exp (-\Delta t/\tau(T(n))),$$

à partir d'une température fictive Tf(0) de la fibre optique (1) à la première position n = 0, Tf(n) étant une température fictive du coeur à une position n dans l'étape d'étirage ou l'étape de refroidissement lent, et τ(T(n)) étant une constante de relaxation structurelle d'un matériau du coeur à une température T(n) de la fibre optique (1) pour la position n.

2. Procédé de fabrication de fibre optique selon la revendication 1, dans lequel à une position où la fibre optique (1), après avoir été formée dans le four d'étirage (10), est exposée à un gaz ayant une température de 500°C ou moins, une température moyenne de la fibre optique (1) dans la direction de coupe est de 1650°C ou moins.

3. Procédé de fabrication de fibre optique selon la revendication 1 ou 2, dans lequel 3σ de variation d'un diamètre extérieur de verre de la fibre optique dans une direction longitudinale n'est pas supérieure à 0,2 μm.

4. Procédé de fabrication de fibre optique selon la revendication 1, comprenant en outre une étape de traitement au deutérium incluant l'exposition de la fibre optique (1) à une atmosphère de deutérium après l'étape de refroidissement lent.

FIG. 1

FIG. 2

FIG. 3

| RANGE OF EACH AREA | BASELINE |
|---|---|
| 800cm⁻¹ | 880-740 (cm⁻¹) |
| D2 (600cm⁻¹) | 640-575 (cm⁻¹) |
| D1 (490cm⁻¹) | 525-475 (cm⁻¹) |

EP 2 899 168 B1

# FIG. 4

## FIG. 5

$Tf_{(0)} = T,\ n = 0$ — 1

DETERMINE $T(n)$ AT WHICH $Tf(n+1)$ IS LOWEST — 2

$T(n) \leq$ PREDETERMINED TEMPERATURE? — 3

NO

YES

$n = n+1$

END OF CALCULATION — 4

ADJUST CONDITIONS TO MAKE TEMPERATURE OF OPTICAL FIBER WITHIN ±100°C OF $T(n)$ — 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006058494 A
- US 2002059816 A1
- US 2006101861 A1
- US 5320658 A

**Non-patent literature cited in the description**

- **D.-L. KIM et al.** *J. Non-Cryst. Solids,* 2001, vol. 286, 136-138
- **S. SAKAGUCHI et al.** *Applied Optics,* 1998, vol. 37 (33), 7708-7711
- **K. SAITO et al.** *J. Am. Ceram. Soc.,* 2006, vol. 89 (1), 65-69
- *IEICE Technical Report OFT,* August 2007